# EUROPÄISCHE PATENTSCHRIFT

(11) **EP 3 808 949 B1**
(45) Veröffentlichungstag und Bekanntmachung des Hinweises auf die Patenterteilung: **22.03.2023**
(21) Anmeldenummer: 20196336.0
(22) Anmeldetag: 16.09.2020
(51) Int. Cl.: F01N 3/28

(54) **MISCHERANORDNUNG**
MIXER ARRANGEMENT
SYSTÈME MÉLANGEUR

(30) Priorität: 18.10.2019 DE 102019128193
(43) Veröffentlichungstag der Anmeldung: 21.04.2021
(73) Patentinhaber: Purem GmbH, 66539 Neunkirchen (DE); Volvo Truck Corporation, 405 08 Göteborg (SE)
(72) Erfinder: Kast, Peter, 73732 Esslingen (DE); Dentler, Michael, 73262 Reichenbach (DE); Eder, Vincent, 73230 Kirchheim unter Teck (DE); Rothfuss, Mathias, 71332 Waiblingen (DE)
(74) Vertreter: Ruttensperger Lachnit Trossin Gomoll

(56) Entgegenhaltungen:
- EP-A1- 0 590 699
- WO-A1-2016/118720
- DE-A1- 4 203 807
- GB-A- 2 523 084
- US-A- 5 105 621

## Beschreibung

Die vorliegende Erfindung betrifft eine Mischeranordnung für eine Abgasanlage einer Brennkraftmaschine.

Derartige Mischeranordnungen sorgen in Abgasanlagen von insbesondere als Dieselaggregate ausgebildeten Brennkraftmaschinen dafür, dass ein in den Abgasstrom eingespritztes Reaktionsmittel, beispielsweise eine Harnstoff/WasserLösung, mit dem Abgas effizient durchmischt wird, so dass in einer stromabwärts folgenden Katalysatoranordnung, insbesondere SCR-Katalysatoranordnung, die zu einer Verringerung des Stickoxidanteils im Abgas führende katalytische Reaktion ablaufen kann.

Aus der DE 10 2014 108 809 C5 ist eine Mischeranordnung bekannt, welche ein näherungsweise zylindrisches Abgasmischrohr umfasst. An einem axialen Endbereich des Abgasmischrohrs ist ein Bodenelement getragen, an welchem eine das Reaktionsmittel in ein in dem Abgasmischrohr gebildetes Mischvolumen einspritzende Reaktionsmittelabgabeanordnung, im Allgemeinen auch als Injektor bezeichnet, getragen ist. In dem Abgasmischrohr sind in Richtung einer Rohrlängsachse aufeinander folgend mehrere Reihen von Abgasdurchtrittsöffnungen ausgebildet, durch welche hindurch das Abgasmischrohr umströmendes Abgas in das Mischvolumen eintreten und sich dort mit dem Reaktionsmittel durchmischen kann. Auch in einem sich im Wesentlichen konisch radial erweiternden Längenbereich des Abgasmischrohrs sind Abgasdurchtrittsöffnungen vorgesehen.

Eine Mischeranordnung gemäß dem Oberbegriff des Anspruchs 1 ist aus der WO 2016/118720 A1 bekannt. Bei dieser Mischeranordnung ist ein Drallerzeugungselement mit einem zylindrischen Abschnitt und einem in einem axialen Endbereich des zylindrischen Abschnitts daran anschließenden, kegelstumpfartigen und sich somit radial erweiternden Abschnitt ausgebildet. An dem anderen axialen Endbereich des zylindrischen Abschnitts ist ein Bodenelement getragen, in welchem an einer dem Abgasstrom zugewandten Vorderseite ein von einer Reaktionsmittel-Eingabeöffnung ausgehendes und radial sich erweiterndes Reaktionsmittel-Aufnahmevolumen gebildet ist.

Die DE 42 03 807 A1 offenbart eine Vorrichtung zur katalytischen Stickoxidreduktion, bei welcher im Abgasstrom ein Strömungsleitelement mit einem zylindrischen Abschnitt und einem daran anschließenden kegelstumpfartigen Abschnitt angeordnet ist.

Es ist die Aufgabe der vorliegenden Erfindung, eine Mischeranordnung für eine Abgasanlage einer Brennkraftmaschine bereitzustellen, welche bei verringerter Gefahr der Entstehung von Ablagerungen eines Reaktionsmittels ein verbessertes Mischverhalten für das eingespritzte Reaktionsmittel bereitstellt.

Erfindungsgemäß wird diese Aufgabe gelöst durch eine Mischeranordnung für eine Abgasanlage einer Brennkraftmaschine gemäß Anspruch 1.

Bei der erfindungsgemäß aufgebauten Mischeranordnung hat das Bodenelement nicht nur die Aufgabe, das in einem Drallerzeugungselement bereitgestellte Mischvolumen axial abzuschließen bzw. die Reaktionsmitteleingabeanordnung zum Einspritzen des Reaktionsmittels zu tragen, sondern stellt mit dem Reaktionsmittel-Aufnahmevolumen auch ein Volumen bereit, in welches über die zu diesem Reaktionsmittel-Aufnahmevolumen offenen Abgasdurchtrittskanäle ein das eingespritzte Reaktionsmittel umgebender Abgasstrom erzeugt wird. Diese Einspeisung von Abgas in das Reaktionsmittel-Aufnahmevolumen sorgt dafür, dass keine durch eine Strömungsumlenkung oder Verwirbelungen aus dem Sprühkegel des Reaktionsmittels abgelenkten Reaktionsmitteltröpfchen sich am Bodenelement ansammeln und dort Ablagerungen bilden können. Der in das Reaktionsmittel-Aufnahmevolumen eingeleitete Abgasstrom sorgt dafür, dass das gesamte eingespritzte Reaktionsmittel in den Bereich des Mischvolumens gelangt und sich dort effizient mit dem über die Abgasdurchtrittsöffnungen gleichermaßen in das Mischvolumen eingeleiteten Abgas durchmischen kann.

Für eine feste Verbindung mit dem Bodenelement kann das Drallerzeugungselement mit einem ringartigen Verbindungsbereich auf einen Aufnahmebereich an der Vorderseite des Bodenelements axial aufgesetzt und mit dem Bodenelement verbunden sein.

Eine baulich einfach zu realisierende und die Ablagerung von Reaktionsmittel auf dem Bodenelement effizient unterbindende Ausgestaltung wird dadurch erreicht, dass wenigstens ein, vorzugsweise jeder Abgasdurchtrittskanal eine an der Vorderseite des Bodenelements vorgesehene, axial offene nutartige Einsenkung umfasst.

Um dabei den Eintritt von Abgas in die Abgasdurchtrittskanäle zu ermöglichen, kann wenigstens ein, vorzugsweise jeder Abgasdurchtrittskanal im Bereich einer zwischen dem Bodenelement und dem ringartigen Verbindungsbereich des Drallerzeugungselements gebildeten Eintrittsöffnung nach radial außen offen sein.

Für den Eintritt von Abgas in das im Bodenelement gebildete Reaktionsmittel-Aufnahmevolumen kann ferner wenigstens ein Abgasdurchtrittskanal ein zu dem Reaktionsmittel-Aufnahmevolumen nach radial innen offenes, das Bodenelement durchsetzendes Loch umfassen. Ein derartiges Loch kann beispielsweise als Bohrung in das Bodenelement eingebracht werden.

Für eine effiziente Durchmischung des in das Mischvolumen gelangenden Reaktionsmittels mit in das Mischvolumen eintretendem Abgas kann das im Drallerzeugungselement bereitgestellte Mischvolumen ausgehend vom Bodenelement in Richtung der Öffnungsachse sich radial erweiternd ausgebildet sein.

Grundsätzlich ist es vorteilhaft, für eine gleichmäßige und effiziente Durchmischung von Abgas und Reaktionsmittel eine zur Öffnungsachse, welche im Wesentlichen auch einer Längsmittenachse des Drallerzeugungselements bzw. des Mischvolumens entsprechen kann, konzentrische bzw. im Wesentlichen symmetrische Drallströmung zu erzeugen. Da, abhängig von der Integration der Mischeranordnung in den Abgasstrom, jedoch grundsätzlich nicht gewährleistet werden kann, dass das Drallerzeugungselement in allen Umfangsbereichen gleichmäßig von Abgas angeströmt wird, wird für eine eine ungleichmäßige Anströmung mit Abgas kompensierende Ausgestaltung des Drallerzeugungselements vorgeschlagen, dass wenigstens ein Teil der in Umfangsrichtung aufeinander folgenden Abgasdurchtrittsöffnungen mit zueinander unterschiedlicher Größe oder/und Form oder/und unterschiedlichem Abstand zu einer in Umfangsrichtung unmittelbar folgenden Abgasdurchtrittsöffnung ausgebildet ist.

Die Entstehung einer Drallströmung kann dadurch unterstützt werden, dass in Zuordnung zu wenigstens einer, vorzugsweise jeder Abgasdurchtrittsöffnung am Drallerzeugungselement wenigstens ein Strömungsablenkelement vorgesehen ist.

Wenn dabei wenigstens zwei in Zuordnung zu verschiedenen Abgasdurchtrittsöffnungen vorgesehene Strömungsablenkelemente mit zueinander unterschiedlicher Größe oder/und Form oder/und Anstellung ausgebildet sind, kann auch dadurch eine ungleichmäßige Anströmung des Drallerzeugungselements mit Abgas kompensiert werden.

Um im Inneren des Mischvolumens das Entstehen der Drallströmung nicht zu beeinträchtigen, wird weiter vorgeschlagen, dass wenigstens ein, vorzugsweise jedes Strömungsablenkelement sich in Richtung vom Mischvolumen weg, also am Drallerzeugungselement sich nach außen erstreckt.

Insbesondere bei der vorangehend beschriebenen nicht symmetrischen Ausgestaltung des Drallerzeugungselements ist es vorteilhaft, für eine definierte Positionierung desselben im Abgasstrom Positioniermittel vorzusehen, um eine definierte Drehpositionierung des Drallerzeugungselements bezüglich des Bodenelements um die Öffnungsachse vorgeben zu können.

Zur Anbindung einer Reaktionsmitteleingabeanordnung an das Bodenelement kann an der Rückseite des Bodenelements eine Befestigungsanordnung vorgesehen sein.

Wenn die Befestigungsanordnung eine Mehrzahl von um die Reaktionsmittel-Eingabeöffnung mit Umfangsabstand zueinander angeordneten und zur Rückseite offenen Befestigungsöffnungen, vorzugsweise Innengewindeöffnungen, umfasst, kann die Reaktionsmitteleingabeanordnung in einfacher Weise beispielsweise unter Einsatz von Schraubbolzen an das Bodenelement angebunden werden.

Um dabei eine Anpassung an die bauliche Ausgestaltung einer Reaktionsmitteleingabeanordnung erreichen zu können, kann wenigstens eine Befestigungsöffnung einen größeren Radialabstand zur Öffnungsachse aufweisen als wenigstens eine andere Befestigungsöffnung.

Da die Befestigungsöffnungen grundsätzlich als nur zur Rückseite des Bodenelements offene Öffnungen auszugestalten sind, um Abgasleckagen zu vermeiden, kann für eine effiziente Ausnutzung des zur Verfügung stehenden Aufbaumaterials des Bodenelements wenigstens eine Befestigungsöffnung im Bereich eines am Bodenelement vorgesehenen Positioniervorsprungs der Positioniermittel vorgesehen sein.

Die Erfindung betrifft ferner eine Abgasanlage, umfassend eine Abgasführungskomponente und eine an der Abgasführungskomponente getragene Mischeranordnung mit erfindungsgemäßem Aufbau, wobei an der Rückseite des Bodenelements eine Reaktionsmitteleingabeanordnung angeordnet ist.

Die vorliegende Erfindung wird nachfolgend mit Bezug auf die beiliegenden Figuren detailliert beschrieben. Es zeigt:
- Fig. 1: eine Seitenansicht einer Mischeranordnung für eine Abgasanordnung einer Brennkraftmaschine in Bildrichtung I in Fig. 2 und Fig. 4;
- Fig. 2: eine Draufsicht der Mischeranordnung der Fig. 1 in Blickrichtung II in Fig. 1;
- Fig. 3: eine Längsschnittansicht der Mischeranordnung der Fig. 1, geschnitten längs einer Linie III-III in Fig. 2;
- Fig. 4: eine Längsschnittansicht der Mischeranordnung der Fig. 1, geschnitten längs einer Linie IV-IV in Fig. 2;
- Fig. 5: eine Rückansicht der Mischeranordnung der Fig. 1, betrachtet in Richtung V in Fig. 1;
- Fig. 6: eine Teilansicht einer Abgasanlage mit der in diese integrierten Mischeranordnung der Fig. 1.

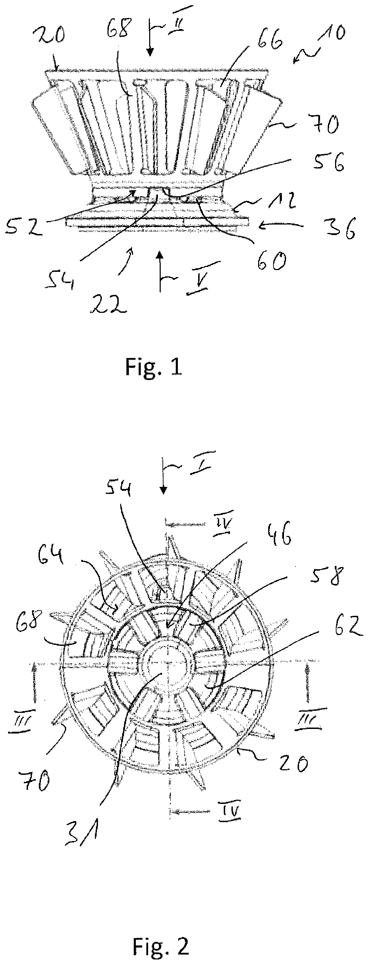

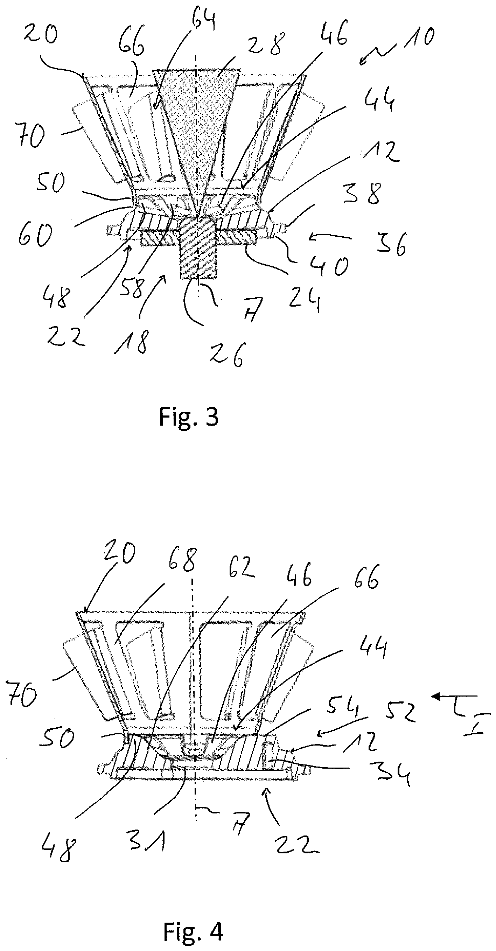

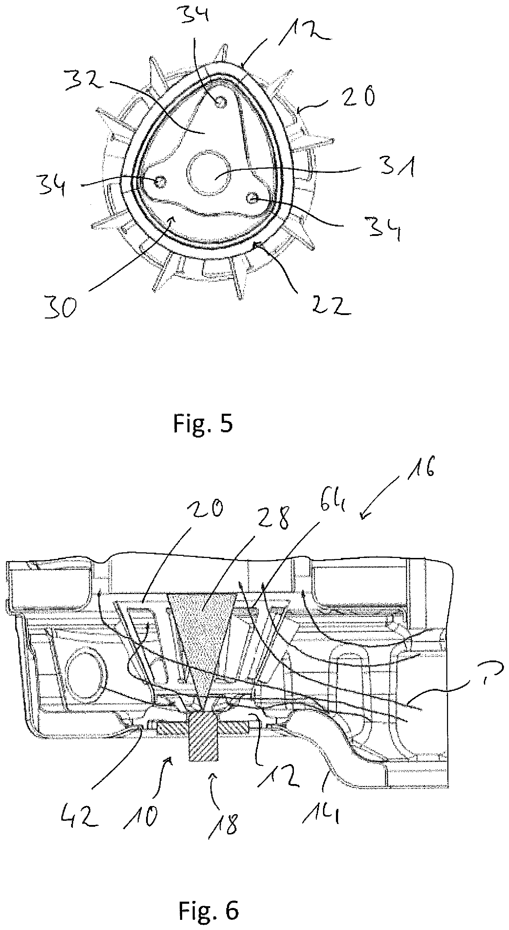

Die in den Fig. 1 bis 5 dargestellte Mischeranordnung 10 ist im Wesentlichen mit zwei Bauteilen bzw. zwei Baugruppen aufgebaut. Dies ist zum einen ein allgemein mit 12 bezeichnetes Bodenelement, mit welchem die Mischeranordnung 10 an einer in Fig. 6 erkennbaren, beispielsweise haubenartigen Komponente 14 einer allgemein mit 16 bezeichneten Abgasanlage festgelegt werden kann, und an welcher, wie in Fig. 3 veranschaulicht, eine allgemein mit 18 bezeichnete Reaktionsmitteleingabeanordnung angebracht wird. Ferner umfasst die Mischeranordnung 10 ein Drallerzeugungselement 20, welches in nachfolgend beschriebener Art und Weise mit dem Bodenelement 12 verbunden ist.

Das Bodenelement 12 kann beispielsweise als geschmiedetes Bauteil, als Gussbauteil, als Sinterbauteil oder als durch spanabhebende Bearbeitung hergestelltes Metallbauteil bereitgestellt sein. Das Drallerzeugungselement 20 kann beispielsweise als Blechumformteil ausgebildet sein.

Das Bodenelement 12 weist eine allgemein mit 22 bezeichnete Rückseite auf, an welcher die allgemein auch als Injektor bezeichnete Reaktionsmitteleingabeanordnung 18 beispielsweise mit einem Befestigungsflansch 24 angebracht werden kann. An dem Befestigungsflansch 24 ist eine Einspritzdüse 26 getragen, über welche, wie nachfolgend noch beschrieben und in Fig. 3 angedeutet, das einzuspritzende Reaktionsmittel in Form eines Sprühkegels 28 abgegeben wird. Im Bodenelement 12 ist eine Reaktionsmittel-Eingabeöffnung 31 ausgebildet, in welche beispielsweise die Einspritzdüse 26 eingreifend positioniert werden kann bzw. durch welche hindurch das einzuspritzende Reaktionsmittel geleitet bzw. eingespritzt wird.

An der Rückseite 22 des Bodenelements 12 ist eine in Fig. 5 erkennbare Befestigungsanordnung 30 ausgebildet, über welche die Reaktionsmitteleingabeanordnung 18 bzw. der Befestigungsflansch 24 derselben am Bodenelement 12 festgelegt werden kann. Die Befestigungsanordnung 30 kann beispielsweise einen zur Anlage des Befestigungsflansches 24 ausgebildeten, planen Anlageflächenbereich 32 und eine Mehrzahl von um die Reaktionsmittel-Eingabeöffnung 31 mit Umfangsabstand zueinander angeordneten und beispielsweise als Innengewindeöffnungen ausgebildete Befestigungsöffnungen 34 umfassen. Die Formgebung des Anlageflächenbereichs 32 und die Positionierung der Befestigungsöffnungen 34 kann auf die Formgebung des Befestigungsflansches 24 abgestimmt sein. Im dargestellten Beispiel weisen die Befestigungsöffnungen 34 unterschiedliche Abstände zur Reaktionsmittel-Eingabeöffnung 31 bzw. einer in Fig. 3 erkennbaren Öffnungsachse bzw. Öffnungsmittenachse A derselben auf. Dies führt dazu, dass insbesondere im Bereich der Rückseite 22 das Bodenelement 12 eine von einer im Wesentlichen runden Umfangskontur abweichende, leicht ovale Umfangskontur aufweist.

Die Befestigungsanordnung 30 radial außen umgebend ist am Bodenelement 12 ein Verbindungsbereich 36 vorgesehen. Dieser Verbindungsbereich 36 weist einen nach radial außen vorstehenden Verbindungsflansch 38 und radial innen an diesen anschließend eine Verbindungsschulter 40 auf. Wie in Fig. 6 dargestellt, kann mit diesem Verbindungsbereich 36 das Bodenelement 12 in eine in der Abgasführungskomponente 14 ausgebildete Öffnung 42 beispielsweise von der Innenseite her eingesetzt werden, so dass der Verbindungsflansch 38 an der Innenseite der Abgasführungskomponente 14 anliegt und über die Verbindungsschulter 40 eine Zentrierung des Bodenelements 12 in der Öffnung 42 vorgesehen werden kann. Das Bodenelement 12 kann dann beispielsweise durch eine in Umfangsrichtung umlaufende Schweißnaht im Bereich der Verbindungsschulter 40 bzw. des Verbindungsflansches 38 fest und gasdicht an die Abgasführungskomponente 14 angebunden werden.

An einer Vorderseite 44 des Bodenelements 12 ist in diesem ein Reaktionsmittel-Aufnahmevolumen 46 ausgebildet. Die Reaktionsmittel-Eingabeöffnung 31 ist zu dem Reaktionsmittel-Aufnahmevolumen 46 offen, und das Reaktionsmittel-Aufnahmevolumen 46 weist in axialer Richtung, ausgehend von der Reaktionsmittel-Eingabeöffnung 31, eine radial sich erweiternde, beispielsweise konische Struktur auf, so dass das Reaktionsmittel-Aufnahmevolumen 46 an seinem der Rückseite 22 näher liegenden Bereich eine geringere Querschnittsfläche aufweist, als an seinem der Vorderseite 44 näher liegenden Bereich.

Im Bereich der Vorderseite 44 bildet das Bodenelement 12 einen mit einer Stufe ausgebildeten Aufnahmebereich 48, auf welchen das Drallerzeugungselement 20 mit einem ringartigen Verbindungsbereich 50 axial aufgesetzt ist und durch welchen das Drallerzeugungselement 20 radial und axial definiert bezüglich des Bodenelements 12 positioniert ist. Das Drallerzeugungselement 20 kann beispielsweise durch Verschweißung mit dem Bodenelement 12 im Bereich des den Aufnahmebereich 48 übergreifenden bzw. daran sich axial abstützenden Verbindungsbereichs 50 fest verbunden sein. Insbesondere kann zur einfachen Herstellung der Verbindung des Drallerzeugungselements 20 mit dem Bodenelement 12 das Drallerzeugungselement 20 in seinem ringartigen Verbindungsbereich 50 angepasst an eine entsprechende Formgebung des Aufnahmebereichs 48 mit im Wesentlichen zylindrischer Struktur ausgebildet sein.

Um auch eine definierte Drehpositionierung bzw. Umfangspositionierung des Drallerzeugungselements 20 bezüglich des Bodenelements 12 zu erhalten, sind allgemein mit 52 bezeichnete Positioniermittel vorgesehen. Die Positioniermittel 52 umfassen beispielsweise dort, wo die in Fig. 5 erkennbare Befestigungsöffnung 34 mit größerem Abstand zur Reaktionsmittel-Eingabeöffnung 31 angeordnet ist, einen Positioniervorsprung 54, welcher in eine in Fig. 1 erkennbare Positionieraussparung 56 im ringartigen Verbindungsbereich 50 des Drallerzeugungselements 20 eingreifend positioniert ist und somit nur eine einzige Drehpositionierung des Drallerzeugungselements 20 bezüglich des Bodenelements 12 zulässt. Es ist darauf hinzuweisen, dass beispielsweise über den Umfang verteilt mehrere derartige Positioniervorsprünge 54 und entsprechend auch Positionieraussparungen 56 vorgesehen sein könnten, so dass der ringartige Verbindungsbereich in Umfangsrichtung grundsätzlich auch mehrfach unterbrochen sein kann, gleichwohl jedoch weiterhin eine allgemein ringartige Gesamtstruktur zur Anbindung des Drallerzeugungselements 20 an das Bodenelement 12 bereitstellt. Dadurch, dass eine der Befestigungsöffnungen 34 im Bereich eines derartigen Positioniervorsprungs 54 angeordnet ist, mit diesem also in Umfangsrichtung und auch in radialer Richtung sich überlappend positioniert ist, ist gewährleistet, dass die zum Vermeiden von Gasleckagen als Sacköffnung auszubildende Befestigungsöffnung 34 in das axial massive Aufbaumaterial des Bodenelements 12 eingebracht werden kann.

Im Bodenelement 12 sind in Zuordnung zu dem Reaktionsmittel-Aufnahmevolumen 46 mehrere in Umfangsrichtung mit Abstand zueinander und aufeinander folgend angeordnete, allgemein in sternartiger Struktur vorgesehene Abgasdurchtrittskanäle 58 vorgesehen. Die Abgasdurchtrittskanäle 58 erstrecken sich z.B. radial ausgehend von der Reaktionsmittel-Eingabeöffnung 31 bis nach radial außen und sind aufgrund ihrer Ausgestaltung als axial offene, nutartige Einsenkungen grundsätzlich axial in Richtung zur Vorderseite 44 hin offen. Entsprechend der Formgebung des Bodenelements 12 zum Bereitstellen der sich erweiternden Geometrie des Reaktionsmittel-Aufnahmevolumens 46 sind die im Wesentlichen radial sich erstreckenden Abgasdurchtrittskanäle 58 dabei in Richtung der Öffnungsachse A leicht angestellt. Radial außen sind die Abgasdurchtrittskanäle 58 über Eintrittsöffnungen 60 nach außen, also zur Umgebung bezüglich der Mischeranordnung 10, offen. Diese Eintrittsöffnungen 60 sind zwischen dem Bodenelement 12 und dem ringartigen Verbindungsbereich 50 des Drallerzeugungselements 20 begrenzt.

In Umfangsrichtung zwischen den Abgasdurchtrittskanälen 58 liegen Materialbereiche 62 des Bodenelements 12, welche im Wesentlichen auch die in Achsrichtung radial sich erweiternde Struktur des Reaktionsmittel-Aufnahmevolumens 46 festlegen. Die nicht im Bereich des Positioniervorsprungs 54 positionierten Befestigungsöffnungen 34, welche gleichermaßen zum Vermeiden von Gasleckagen als Sacköffnungen ausgebildet sind, können im Bereich dieser Materialbereiche 62 vorgesehen sein, also dort, wo das Bodenelement 12 eine vergleichsweise große axiale Materialdicke aufweist. Auf diese Art und Weise kann eine stabile, beispielsweise durch Verschraubung realisierte Anbindung der Reaktionsmittelabgabeanordnung 18 an das Bodenelement 12 gewährleistet werden.

Das Drallerzeugungselement 20 stellt in seinem Innenbereich ein Mischvolumen 64 bereit. Auch dieses Mischvolumen 64 weist in axialer Richtung, ausgehend von der Anbindung des Drallerzeugungselements 20 an das Bodenelement 12, eine radial sich erweiternde, beispielsweise konische Struktur auf. In Umfangsrichtung um die Öffnungsachse A, welche auch einer Längsmittenachse des Drallerzeugungselements 20 und im Wesentlichen auch der Haupt-Einspritzrichtung entspricht, in welcher das Reaktionsmittel in Form des Sprühkegels 28 in das Reaktionsmittel-Aufnahmevolumen 46 bzw. das Mischvolumen 64 eingespritzt wird, sind in dem Drallerzeugungselement 20 mehrere mit Umfangsabstand zueinander angeordnete Abgasdurchtrittsöffnungen 66 vorgesehen. Die Abgasdurchtrittsöffnungen 66 können beispielsweise so gestaltet bzw. dimensioniert sein, dass sie sich im Wesentlichen jeweils über nahezu die gesamte axiale Ausdehnung des Drallerzeugungselements 20 erstrecken und in Richtung vom Bodenelement 12 weg eine zunehmende Umfangsabmessung aufweisen, so dass zwischen in Umfangsrichtung einander unmittelbar benachbarten Abgasdurchtrittsöffnungen 66 Stege 68 mit näherungsweise konstanter Abmessung in Umfangsrichtung ausgebildet sind.

In Zuordnung zu jeder Abgasdurchtrittsöffnung 66 ist ein klappen- oder flügelartiges Strömungsablenkelement 70 vorgesehen. Diese können beispielsweise dadurch erzeugt werden, dass beim Einbringen eines im Wesentlichen U-förmigen Schlitzes in das Aufbaumaterial des Drallerzeugungselements zum Erzeugen einer jeweiligen Abgasdurchtrittsöffnung 66 der von diesem Schlitz umgebene Materialbereich nach radial außen abgebogen wird, so dass einerseits eine jeweilige Abgasdurchtrittsöffnung 66 entsteht, und andererseits durch diesen Materialbereich ein an einen jeweiligen Steg 68 anschließendes Strömungsablenkelement 70 entsteht. Die Umfangskontur der Strömungsablenkelemente 70 entspricht somit im Wesentlichen auch der Umfangskontur der diesen jeweils zugeordneten Abgasdurchtrittsöffnungen 66. Es ist selbstverständlich, dass die Strömungsablenkelemente 70 auch von der Umfangskontur der jeweils zugeordneten Abgasdurchtrittsöffnungen 66 abweichende Umfangskonturen aufweisen können und beispielsweise in mehrere verschieden geformte und auch verschieden angestellte, also bezüglich der Grundgeometrie des Drallerzeugungselements 20 unter verschiedenen Winkeln angeordnete Segmente unterteilt sein können.

Der Fig. 2 ist deutlich zu entnehmen, dass die in Umfangsrichtung aufeinander folgenden Abgasdurchtrittsöffnungen 66 mit variierendem Umfangsabstand vorgesehen sind. Dies bedeutet, dass nicht alle Abgasdurchtrittsöffnungen 66 zu den unmittelbar benachbarten Abgasdurchtrittsöffnungen 66 den gleichen Umfangsabstand aufweisen, was zur Folge hat, dass Stege 68 mit unterschiedlicher Umfangsabmessung vorhanden sind. Grundsätzlich können die Abgasdurchtrittsöffnungen 66 zueinander auch unterschiedlich dimensioniert sein. Auch die Strömungsablenkelemente 70 können zueinander unterschiedlich dimensioniert bzw. bezüglich der Grundgeometrie des Drallerzeugungselements 20 unterschiedlich angestellt bzw. angewinkelt sein, also in unterschiedlichem Ausmaß nach radial außen abgebogen sein.

Die Fig. 6 veranschaulicht die Integration einer so aufgebauten Mischeranordnung 10 in die Abgasanlage 16. Die Fig. 6 veranschaulicht anhand von Strömungspfeilen P die Anströmung der Mischeranordnung 10 mit Abgas an ihrer Außenseite.

Insbesondere ist zu erkennen, dass aufgrund der Einbindung in die Abgasanlage 16 die Mischeranordnung 10 im Bereich des Drallerzeugungselements 20 in Umfangsrichtung nicht gleichmäßig von Abgas angeströmt wird und somit eine grundsätzlich ungleichmäßige Eintrittscharakteristik des Abgases in das Mischvolumen 64 bei Erzeugung einer Drallströmung auftreten würde. Diese ungleichmäßige Einströmung wird kompensiert durch die vorangehend beschriebene variierende Positionierung oder/und unterschiedliche Dimensionierung oder/und unterschiedliche Formgebung der Abgasdurchtrittsöffnungen 66 bzw. auch der Strömungsablenkelemente 70. Trotz der in Umfangsrichtung unterschiedlichen Anströmung des Drallerzeugungselements 20 kann auf diese Art und Weise eine bezüglich der Öffnungsachse A näherungsweise konzentrische bzw. nahezu symmetrische Drallströmung beim Eintritt von Abgas in das Mischvolumen erzeugt werden, so dass auch eine sehr gleichmäßige Durchmischung mit dem in Form des Sprühkegels 28 in das Mischvolumen 64 eingespritzten Reaktionsmittel erzeugt werden kann.

Das die Mischeranordnung 10 von außen anströmende Abgas strömt jedoch nicht nur über die Abgasdurchtrittsöffnungen 66 in das Mischvolumen 10 ein, sondern strömt auch über die Eintrittsöffnungen 60 und die Abgasdurchtrittskanäle 58 in das Reaktionsmittel-Aufnahmevolumen 46 in dem Bereich ein, in welchem das Reaktionsmittel aus der Einspritzdüse 26 der Reaktionsmitteleingabeanordnung 18 austritt. Es wird dadurch ein Abgasstrom im Inneren des Reaktionsmittel-Aufnahmevolumens 46 erzeugt, welcher, ausgehend von der Oberfläche des Bodenelements 12, den Sprühkegel 28 umhüllt, somit also eine Mantelströmung bildet. Diese Mantelströmung leitet das in Form des Sprühkegels 28 abgegebene Reaktionsmittel aus dem Reaktionsmittel-Aufnahmevolumen in das Mischvolumen 64, wo dann die primäre Vermischung mit Abgas auftritt.

Durch das Erzeugen dieses in das Reaktionsmittel-Aufnahmevolumen 46 eingeleiteten Abgasstroms wird gewährleistet, dass Verwirbelungen oder Rückströmungen nicht dazu führen können, dass Reaktionsmitteltröpfchen sich im Bereich der Oberfläche des Bodenelements 12, also im Bereich des Reaktionsmittel-Aufnahmevolumens 46, am Bodenelement 12 niederschlagen und dort Ablagerungen bilden können. Das Erzeugen einer derartigen Mantelströmung gewährleistet, dass im Wesentlichen das gesamte abgegebene Reaktionsmittel in das Mischvolumen 64 gelangt und dort zur Durchmischung mit dem in Form einer Drallströmung ebenfalls in das Mischvolumen 64 eingeleiteten Abgas zur Verfügung steht. Gleichzeitig gewährleistet die Umströmung des Bodenelements 12 im Bereich des Reaktionsmittel-Aufnahmevolumens 46 mit den heißen Verbrennungsabgasen, dass eine das Entstehen von Ablagerungen unterstützende Abkühlung des Bodenelements 12 vermieden wird.

Durch die erfindungsgemäße Ausgestaltung einer Mischeranordnung wird gewährleistet, dass bei deutlich verminderter Gefahr der Entstehung von Ablagerungen aufgrund einer sehr gleichförmigen Abgabe des Reaktionsmittels in das Mischvolumen und aufgrund der Möglichkeit, eine sehr gleichmäßige Wirbelströmung mit zur Öffnungsachse A im Wesentlichen konzentrischer Struktur erzeugen zu können, eine sehr effiziente Durchmischung von Reaktionsmittel und Abgas und eine effiziente Verdampfung von Abgas erzeugt werden können, was wiederum zu einer verbesserten Abgasreinigung insbesondere im Kaltstart oder in niedrigen Lastpunkten in einer stromabwärts folgenden SCR-Katalysatoranordnung führen kann.

Es ist abschließend darauf hinzuweisen, dass die in den Figuren dargestellte und vorangehend detailliert beschriebene Mischeranordnung in verschiedenen Aspekten variiert werden kann. So kann beispielsweise die Anordnung oder/und Formgebung der Abgasdurchtrittsöffnungen bzw. der Strömungsablenkelemente angepasst an die Struktur einer jeweiligen Abgasanlage bzw. die Strömungsführung in einer Abgasanlage anders gewählt werden, als dargestellt. Auch die Anzahl bzw. Dimensionierung der Abgasdurchtrittskanäle kann von der dargestellten Anordnung bzw. Dimensionierung abweichen. Grundsätzlich können diese Abgasdurchtrittskanäle auch als im Inneren des Bodenelements sich ersteckende Löcher, beispielsweise durch Bohrungen eingebracht, bereitgestellt werden, welche einerseits nach radial außen offen sind und andererseits im Bereich der das Reaktionsmittel-Aufnahmevolumen umgebenden Oberfläche des Bodenelements zum Reaktionsmittel-Aufnahmevolumen offen sind. Unabhängig davon, in welcher Form die Abgasdurchtrittskanäle ausgebildet sind, ist jedoch darauf zu achten, dass diese sich nicht mit zur Anbindung der Reaktionsmittelabgabeanordnung dienenden Befestigungsöffnungen schneiden, was letztendlich bedeutet, dass die Befestigungsöffnungen einerseits und die Abgasdurchtrittskanäle andererseits in verschiedenen Umfangsbereichen bezüglich der Öffnungsachse anzuordnen sind.

## Patentansprüche

1. Mischeranordnung für eine Abgasanlage einer Brennkraftmaschine, umfassend:
- ein Bodenelement (12) mit einer von einem Abgasstrom in einer Abgasanlage (16) abgewandt zu positionierenden Rückseite (22) und einer dem Abgasstrom zugewandt zu positionierenden Vorderseite (44), wobei in dem Bodenelement (12) eine Reaktionsmittel-Eingabeöffnung (31) ausgebildet ist, wobei die Reaktionsmittel-Eingabeöffnung (31) zu einem in dem Bodenelement (12) ausgebildeten, an der Vorderseite (44) des Bodenelements (12) ausgehend von der Reaktionsmittel-Eingabeöffnung (31) sich in Richtung einer Öffnungsachse (A) radial erweiternden Reaktionsmittel-Aufnahmevolumen (46) offen ist,
- ein mit dem Bodenelement (12) verbundenes, die Öffnungsachse (A) ringartig umgebendes Drallerzeugungselement (20), wobei in dem Drallerzeugungselement (20) ein in Richtung der Öffnungsachse (A) an das Reaktionsmittel-Aufnahmevolumen (46) anschließendes Mischvolumen (64) ausgebildet ist und in dem Drallerzeugungselement (20) eine Mehrzahl von in Umfangsrichtung um die Öffnungsachse (A) aufeinander folgenden Abgasdurchtrittsöffnungen (66) vorgesehen ist,
**dadurch gekennzeichnet, dass** in dem Bodenelement (12) eine Mehrzahl von in Umfangsrichtung um die Öffnungsachse (A) aufeinanderfolgend angeordneten und zu dem Reaktionsmittel-Aufnahmevolumen (46) offenen Abgasdurchtrittskanälen (58) vorgesehen ist, und dass wenigstens ein Abgasdurchtrittskanal (58) eine an der Vorderseite (44) des Bodenelements (12) vorgesehene, axial offene nutartige Einsenkung umfasst.

2. Mischeranordnung nach Anspruch 1, **dadurch gekennzeichnet, dass** das Drallerzeugungselement (20) mit einem ringartigen Verbindungsbereich (50) auf einen Aufnahmebereich (48) an der Vorderseite (44) des Bodenelements (12) axial aufgesetzt und mit dem Bodenelement (12) verbunden ist.

3. Mischeranordnung nach Anspruch 1 oder 2, **dadurch gekennzeichnet, dass** jeder Abgasdurchtrittskanal (58) eine an der Vorderseite (44) des Bodenelements (12) vorgesehene, axial offene nutartige Einsenkung umfasst.

4. Mischeranordnung nach Anspruch 2 und Anspruch 3, **dadurch gekennzeichnet, dass** wenigstens ein, vorzugsweise jeder Abgasdurchtrittskanal (58) im Bereich einer zwischen dem Bodenelement (12) und dem ringartigen Verbindungsbereich (50) des Drallerzeugungselements (26) gebildeten Eintrittsöffnung (60) nach radial außen offen ist.

5. Mischeranordnung nach einem der vorangehenden Ansprüche, **dadurch gekennzeichnet, dass** wenigstens ein Abgasdurchtrittskanal (58) ein zu dem Reaktionsmittel-Aufnahmevolumen (46) nach radial innen offenes, das Bodenelement (12) durchsetzendes Loch umfasst.

6. Mischeranordnung nach einem der vorangehenden Ansprüche, **dadurch gekennzeichnet, dass** das im Drallerzeugungselement (20) bereitgestellte Mischvolumen (64) ausgehend vom Bodenelement (12) in Richtung der Öffnungsachse (A) sich radial erweiternd ausgebildet ist.

7. Mischeranordnung nach einem der vorangehenden Ansprüche, **dadurch gekennzeichnet, dass** wenigstens ein Teil der in Umfangsrichtung aufeinander folgenden Abgasdurchtrittsöffnungen (66) mit zueinander unterschiedlicher Größe oder/und Form oder/und unterschiedlichem Abstand zu einer in Umfangsrichtung unmittelbar folgenden Abgasdurchtrittsöffnung (66) ausgebildet ist.

8. Mischeranordnung nach einem der vorangehenden Ansprüche, **dadurch gekennzeichnet, dass** in Zuordnung zu wenigstens einer, vorzugsweise jeder Abgasdurchtrittsöffnung (66) am Drallerzeugungselement (20) wenigstens ein Strömungsablenkelement (70) vorgesehen ist.

9. Mischeranordnung nach Anspruch 8, dass wenigstens zwei in Zuordnung zu verschiedenen Abgasdurchtrittsöffnungen (66) vorgesehene Strömungsablenkelemente (70) mit zueinander unterschiedlicher Größe oder/und Form oder/und Anstellung ausgebildet sind, oder/und dass wenigstens ein, vorzugsweise jedes Strömungsablenkelement (70) sich in Richtung vom Mischvolumen (64) weg erstreckt.

10. Mischeranordnung nach einem der vorangehenden Ansprüche, **dadurch gekennzeichnet, dass** Positioniermittel (52) vorgesehen sind zum Vorgeben einer definierten Drehpositionierung des Drallerzeugungselements (20) bezüglich des Bodenelements (12) um die Öffnungsachse (A).

11. Mischeranordnung nach einem der vorangehenden Ansprüche, **dadurch gekennzeichnet, dass** an der Rückseite (22) des Bodenelements (12) eine Befestigungsanordnung (30) zur Anbindung einer Reaktionsmitteleingabeanordnung (18) an das Bodenelement (12) vorgesehen ist.

12. Mischeranordnung nach Anspruch 11, **dadurch gekennzeichnet, dass** die Befestigungsanordnung (30) eine Mehrzahl von um die Reaktionsmittel-Eingabeöffnung (31) mit Umfangsabstand zueinander angeordneten und zur Rückseite (22) offenen Befestigungsöffnungen (34), vorzugsweise Innengewindeöffnungen, umfasst.

13. Mischeranordnung nach Anspruch 12, **dadurch gekennzeichnet, dass** wenigstens eine Befestigungsöffnung (34) einen größeren Radialabstand zur Öffnungsachse (A) aufweist als wenigstens eine andere Befestigungsöffnung (34).

14. Mischeranordnung nach Anspruch 10 und Anspruch 12 oder 13, **dadurch gekennzeichnet, dass** wenigstens eine Befestigungsöffnung (34) im Bereich eines am Bodenelement (12) vorgesehenen Positioniervorsprungs (54) der Positioniermittel (52) vorgesehen ist.

15. Abgasanlage, umfassend eine Abgasführungskomponente (14) und eine an der Abgasführungskomponente (14) getragene Mischeranordnung (10) nach Anspruch 1, wobei an der Rückseite (22) des Bodenelements (22) eine Reaktionsmitteleingabeanordnung (18) angeordnet ist.

## Claims

1. Mixer device for an exhaust system of an internal combustion engine, comprising:
- a bottom element (12) with a rear side (22) to be positioned facing away from an exhaust gas stream in an exhaust system (16) and with a front side (44) to be positioned facing the exhaust gas stream, wherein a reactant introduction opening (31) is formed in the bottom element (12), wherein the reactant introduction opening (31) is open to a reactant receiving volume (46) formed in the bottom element (12) expanding radially in the direction of an opening axis (A) on the front side (44) of the bottom element (12) starting from the reactant introduction opening (31),
- a swirl generation element (20) connected to the bottom element (12) and enclosing the opening axis (A) in a ring-like manner, wherein a mixing volume (64) adjoining the reactant receiving volume (46) in the direction of the opening axis (A) is formed in the swirl generation element (20) and a plurality of exhaust gas passage openings (66) following one another in the circumferential direction about the opening axis (A) are provided in the swirl generation element (20),
**characterized in that** a plurality of exhaust gas passage ducts (58), which are arranged in succession in the circumferential direction about the opening axis (A) and are open towards the reactant receiving volume (46), are provided in the bottom element (12), and **in that** at least one exhaust gas passage duct (58) comprises an axially open groove-like depression provided on the front side (44) of the bottom element (12).

2. Mixer device in accordance with claim 1, **characterized in that** the swirl generation element (20) is placed axially with a ring-like connection area (50) onto a mounting area (48) on the front side (44) of the bottom element (12) and is connected to the bottom element (12).

3. Mixer device in accordance with claim 1 or 2, **characterized in that** each exhaust gas passage duct (58) comprises an axially open, groove-like recess provided on the front side (44) of the bottom element (12).

4. Mixer device in accordance with claim 2 and claim 3, **characterized in that** at least one and preferably each exhaust gas passage duct (58) is open radially outwards in the area of an inlet opening (60) formed between the bottom element (12) and the ring-like connection area (50) of the swirl generation element (26).

5. Mixer device in accordance with one of the above claims, **characterized in that** at least one exhaust gas passage duct (58) comprises a hole, which is open radially inwards to the reactant receiving volume (46) and passes through the bottom element (12).

6. Mixer device in accordance with one of the above claims, **characterized in that** the mixing volume (64) provided in the swirl generation element (20) has a radially expanding configuration starting from the bottom element (12) in the direction of the opening axis (A).

7. Mixer device in accordance with one of the above claims, **characterized in that** at least part of the exhaust gas passage openings (66) following one another in the circumferential direction are configured with mutually different sizes or/and shapes or/and with different distances from an exhaust gas passage opening (66) following directly in the circumferential direction.

8. Mixer device in accordance with one of the above claims, **characterized in that** at least one flow deflection element (70) is provided in association with at least one and preferably each exhaust gas passage opening (66) at the swirl generation element (20).

9. Mixer device in accordance with claim 8, **characterized in that** at least two flow deflection elements (70) provided in association with different exhaust gas passage openings (66) are configured with mutually different sizes or/and shapes or/and pitch angles, or/and that at least one and preferably each flow deflection element (70) extends in the direction away from the mixing volume (64).

10. Mixer device in accordance with one of the above claims, **characterized in that** positioning devices (52) are provided for predefining a defined rotary positioning of the swirl generation element (20) in relation to the bottom element (12) about the opening axis (A).

11. Mixer device in accordance with one of the above claims, **characterized in that** a fastening device (30) for arranging a reactant release device (18) at the bottom element (12) is provided on the rear side (22) of the bottom element (12).

12. Mixer device in accordance with claim 11, **characterized in that** the fastening device (30) comprises a plurality of fastening openings (34), preferably internally threaded openings, which are arranged at circumferentially spaced locations around the reactant introduction opening (31) and are open to the rear side (22).

13. Mixer device in accordance with claim 12, **characterized in that** at least one fastening opening (34) has a greater radial distance to the opening axis (A) than at least one other fastening opening (34).

14. Mixer device in accordance with claim 10 and claim 12 or 13, **characterized in that** at least one fastening opening (34) is provided in the area of a positioning projection (54) of the positioning devices (52) provided at the bottom element (12).

15. Exhaust system, comprising an exhaust gas guide component (14) and a mixer device (10) carried at the exhaust gas guide component (14) in accordance with claim 1, wherein a reactant introduction device (18) is arranged on the rear side (22) of the bottom element (22).

## Revendications

1. Dispositif de mélangeur pour un système d'échappement d'un moteur à combustion interne, comprenant :
- un élément de fond (12) avec une côté arrière (22) à positionner à l'opposé d'un flux de gaz d'échappement dans un système d'échappement (16) et avec un côté avant (44) à positionner face au flux de gaz d'échappement, dans lequel une ouverture d'introduction de réactif (31) est formée dans l'élément de fond (12), dans lequel l'ouverture d'introduction de réactif (31) est ouverte vers un volume de réception de réactif (46) formé dans l'élément de fond (12), s'étendant radialement dans la direction d'un axe d'ouverture (A) sur le côté avant (44) de l'élément de fond (12) en partant de l'ouverture d'introduction de réactif (31),
- un élément de génération de tourbillon (20) relié à l'élément de fond (12) et entourant l'axe d'ouverture (A) de manière annulaire, dans lequel un volume de mélange (64) se raccordant au volume de réception de réactif (46) dans la direction de l'axe d'ouverture (A) est formé dans l'élément de génération de tourbillon (20) et une pluralité d'ouvertures de passage de gaz d'échappement (66) se succédant dans la direction circonférentielle autour de l'axe d'ouverture (A) sont prévues dans l'élément de génération de tourbillon (20),
**caractérisé en ce qu'**il est prévu dans l'élément de fond (12) une pluralité de conduits de passage de gaz d'échappement (58) disposés les uns derrière les autres dans la direction circonférentielle autour de l'axe d'ouverture (A) et ouverts vers le volume de réception de réactif (46), et **en ce qu'**au moins un conduit de passage de gaz d'échappement (58) comprend une dépression en forme de rainure ouverte axialement prévue sur le côté avant (44) de l'élément de fond (12).

2. Dispositif de mélangeur selon la revendication 1, **caractérisé en ce que** l'élément de génération de tourbillon (20) est placé axialement avec une zone de connexion annulaire (50) sur une zone de réception (48) sur le côté avant (44) de l'élément de fond (12) et est relié à l'élément de fond (12).

3. Dispositif de mélangeur selon la revendication 1 ou 2, **caractérisé en ce que** chaque conduit de passage de gaz d'échappement (58) comprend un évidement en forme de rainure, ouvert axialement, prévu sur le côté avant (44) de l'élément de fond (12).

4. Dispositif de mélangeur selon la revendication 2 et la revendication 3, **caractérisé en ce qu'**au moins un et de préférence chaque conduit de passage de gaz d'échappement (58) est ouvert radialement vers l'extérieur dans la zone d'une ouverture d'entrée (60) formée entre l'élément de fond (12) et la zone de connexion annulaire (50) de l'élément de génération de tourbillon (26).

5. Dispositif de mélangeur selon l'une des revendications précédentes, **caractérisé en ce qu'**au moins un conduit de passage des gaz d'échappement (58) comprend un trou, qui est ouvert radialement vers l'intérieur vers le volume de réception de réactifs (46) et traverse l'élément de fond (12).

6. Dispositif de mélangeur selon l'une des revendications précédentes, **caractérisé en ce que** le volume de mélange (64) prévu dans l'élément générateur de tourbillon (20) présente une configuration s'élargissant radialement à partir de l'élément de fond (12) en direction de l'axe d'ouverture (A).

7. Dispositif de mélangeur selon l'une des revendications précédentes, **caractérisé en ce qu'**au moins une partie des ouvertures de passage de gaz d'échappement (66) se succédant dans la direction circonférentielle sont configurées avec des tailles ou/et des formes différentes les unes des autres ou/et avec des distances différentes par rapport à une ouverture de passage de gaz d'échappement (66) se succédant directement dans la direction circonférentielle.

8. Dispositif de mélangeur selon l'une des revendications précédentes, **caractérisé en ce qu'**au moins un élément de déviation d'écoulement (70) est prévu en association avec au moins une et de préférence chaque ouverture de passage de gaz d'échappement (66) sur l'élément de génération de tourbillon (20).

9. Dispositif de mélangeur selon la revendication 8, **caractérisé en ce que** au moins deux éléments de déviation d'écoulement (70) prévus en association avec différentes ouvertures de passage de gaz d'échappement (66) sont configurés avec des tailles ou/et des formes ou/et des angles de pas mutuellement différents, ou/et qu'au moins un et de préférence chaque élément de déviation d'écoulement (70) s'étend dans la direction s'éloignant du volume de mélange (64).

10. Dispositif de mélangeur selon l'une des revendications précédentes, **caractérisé en ce que** des dispositifs de positionnement (52) sont prévus pour prédéfinir un positionnement rotatif défini de l'élément générateur de tourbillon (20) par rapport à l'élément de fond (12) autour de l'axe d'ouverture (A).

11. Dispositif de mélangeur selon l'une des revendications précédentes, **caractérisé en ce qu'**un dispositif de fixation (30) pour le raccordement d'un dispositif de libération de réactif (18) sur l'élément de fond (12) est prévu sur le côté arrière (22) de l'élément de fond (12).

12. Dispositif de mélangeur selon la revendication 11, **caractérisé en ce que** le dispositif de fixation (30) comprend une pluralité d'ouvertures de fixation (34), de préférence des ouvertures filetées intérieurement, qui sont disposées à des emplacements espacés circonférentiellement autour de l'ouverture d'introduction de réactif (31) et sont ouvertes vers le côté arrière (22).

13. Dispositif de mélangeur selon la revendication 12, **caractérisé en ce qu'**au moins une ouverture de fixation (34) présente une distance radiale à l'axe d'ouverture (A) plus grande qu'au moins une autre ouverture de fixation (34).

14. Dispositif de mélangeur selon la revendication 10 et la revendication 12 ou 13, **caractérisé en ce qu'**au moins une ouverture de fixation (34) est prévue dans la zone d'une saillie de positionnement (54) des dispositifs de positionnement (52) prévus sur l'élément de fond (12).

15. Système d'échappement, comprenant un composant de guidage de gaz d'échappement (14) et un dispositif de mélangeur (10) porté par le composant de guidage de gaz d'échappement (14) selon la revendication 1, dans lequel un dispositif d'introduction de réactif (18) est disposé sur le côté arrière (22) de l'élément de fond (22).
